# EUROPÄISCHE PATENTSCHRIFT

(11) **EP 3 803 154 B1**
(45) Veröffentlichungstag und Bekanntmachung des Hinweises auf die Patenterteilung: **12.10.2022**
(21) Anmeldenummer: 19731883.5
(22) Anmeldetag: 05.06.2019
(51) Int. Cl.: F16G 11/00, F16G 13/16, H02G 3/04, H02G 7/06, H02G 11/00, G02B 6/44

(54) **KABELFÜHRUNGSKETTE**
CABLE CHAIN
CÂBLE CHAÎNE

(30) Priorität: 05.06.2018 DE 102018208828
(43) Veröffentlichungstag der Anmeldung: 14.04.2021
(73) Patentinhaber: Bentec GmbH Drilling & Oilfield Systems, 48455 Bad Bentheim (DE)
(72) Erfinder: WIGBELS, Guido, 49835 Wietmarschen (DE)
(74) Vertreter: Werner & ten Brink
(86) Internationale Anmeldenummer: PCT/EP2019/064623
(87) Internationale Veröffentlichungsnummer: WO 2019/234090

(56) Entgegenhaltungen:
- EP-A2- 2 696 455
- WO-A1-2015/198126
- DE-A1-102013 223 539
- US-A- 5 824 957

## Beschreibung

Die Erfindung betrifft eine Vorrichtung zur Führung von Leitungen von einem festen oder beweglichen Ort zu einem beweglichen Ort. Beispielhaft kann insoweit auf einen Bohrmast einer Bohranlage verwiesen werden. In einem solchen Bohrmast ist zum Antrieb des Bohrgestänges zum Beispiel ein sogenannter Topdrive vertikal beweglich. Ein solcher Topdrive ist also ein Beispiel für einen beweglichen Ort. Ein Punkt im Bohrmast ist ein Beispiel für einen festen Ort. Zum Versorgen des Topdrive insbesondere mit elektrischer Energie ist eine Führung von Leitungen aus dem Mast zum Topdrive notwendig. Zur Führung und auch zum Schutz entsprechender Leitungen wird eine Vorrichtung der eingangs genannten Art verwendet.

Solche Vorrichtungen sind unter den Fachbegriffen Energiekette, Energieführungskette oder Schleppkette grundsätzlich an sich bekannt.

Solche aus einzelnen nach Art von Kettengliedern gelenkig miteinander verbundenen Elementen bestehende Energieketten sind aufwendig herzustellen, durchaus aufwendig bei der Anbringung und in der Wartung und zum Teil fehleranfällig.

Eine andere Möglichkeit zur Führung von Leitungen von und/oder zu zumindest einem beweglichen Ort besteht in der Verwendung von die jeweiligen Leitungen ummantelnden Schutzschläuchen.

Solche Vorrichtungen sind unter den Fachbegriffen Service Loop grundsätzlich an sich bekannt.

Beide vorgenannten Vorrichtungen zur Führung von Leitungen weisen individuelle Nachteile auf, die nachfolgend stichwortartig genannt sind:
Eine Energiekette muss bei vielen Anwendungen vorne und hinten wegen Windanfälligkeit geführt werden und entsprechend ergibt sich oftmals die Notwendigkeit einer vertikalen Wanne oder von Führungselementen. Es entsteht hoher Engineeringaufwand für die Integration, da vorgegebene Radien eingehalten und Führungen in einer als Anbringungsort vorgesehenen Struktur angebracht werden müssen. Bei einer Energiekette ist keine freie Bewegung zu allen Seiten möglich. Eine Energiekette läuft nur im jeweils durch die Bauart vorgegebenen Radius. Bei einer Montage und Demontage ist die Handhabung schwierig, da sich die Energiekette z.B. beim Anheben gegen den "normalen" Lauf verbiegt, aus der Verankerung springt oder sogar bricht. Eine Energiekette umfasst viele Einzelteile, die herunterfallen können (Drops) und somit zu einer Personengefährdung führen. Eine Energiekette hat bei einer Verwendung von metallischen Gliedern (Stahl) ein hohes Gewicht und ist wartungsintensiv.

Bei einem Schutzschlauch ergeben sich folgende Nachteile / Probleme: Bei einem Kabeldefekt, wie z.B. einem Aderbruch oder Ähnlichem, können keine einzelnen Leitungen ausgetauscht oder repariert werden. Es können keine zusätzlichen Leitungen eingezogen werden. Es ist keinerlei vorbeugende Wartung möglich und die Beschaffenheit der Leitungen ist von außen nicht einsehbar. Der Schlauch ist nur als Ganzes wechselbar. Dies verursacht hohe Kosten. Für den Einsatz in extremer Kälte ist die Materialauswahl schwierig. Eine vorzeitige Alterung des Materials findet statt, es wird brüchig und spröde. Zudem muss der Schlauch bei einer Verwendung in einem explosionsgefährdeten Bereich eine Ableitfähigkeit aufweisen. Die Abfuhr der Stromwärme wird durch die isolierenden Eigenschaften des Schutzschlauchs behindert. All dies macht die Materialauswahl schwierig und bedingt bei einem passenden Material vergleichsweise hohe Kosten. Durch Abrieb zum Beispiel an der zur Anbringung bestimmten Struktur oder an Anbauteilen kann es zu mechanischen Beschädigungen des Schutzschlauchs kommen. Der Biegeradius bei dicken großen Schläuchen ist groß und kann in den Bohrmasten schlecht untergebracht werden.

Aus der DE 10 2013 223 539 A1 ist eine zugentlastete Kabelschutzvorrichtung für medizintechnische Geräte bekannt, die im Rahmen einer patentamtlichen Recherche zum Gegenstand dieser Anmeldung ermittelt wurde. Die Kabelschutzvorrichtung umfasst an einem zentralen Zugentlastungselement mehrere zueinander beanstandete und im Innern einer die Kabelschutzvorrichtung umgebenden Schutzhülle angeordnete Abstandshalterelemente. Die Abstandshalterelemente sind rohrförmig ausgebildet, weisen einen durch Längsspalte in zwei gleiche Abschnitte geteilten Mantel auf, die durch einen zu den Abschnitten symmetrisch angeordneten Steg zusammengehalten werden und mit dem Steg an dem Zugentlastungselement angebracht sind. Aus der EP 2 696 455 A2 ist eine ähnliche Vorrichtung, dort als Kabelschlauch bezeichnet, bekannt. Diese umfasst eine Vielzahl von im Querschnitt C-förmigen Verbindungselementen, wobei diese zum Erhalt des Kabelschlauchs jeweils miteinander verbunden sind und insoweit ein zentrales Zugentlastungselement wie bei der DE 10 2013 223 539 A1 fehlt.

Eine Aufgabe der vorliegenden Erfindung besteht darin, eine Vorrichtung der eingangs genannten Art anzugeben, die zumindest einzelne der oben genannten Nachteile vermeidet oder deren Auswirkungen reduziert.

Diese Aufgabe wird erfindungsgemäß mittels einer im Folgenden kurz, aber ohne Verzicht auch eine weitergehende Allgemeingültigkeit, als Kabelführungskette bezeichneten Vorrichtung mit den Merkmalen des Anspruchs 1 gelöst.

Die Vorrichtung umfasst als zugfestes Zentralelement zum Beispiel eine Gliederkette / Rundstahlkette - im Folgenden nur Gliederkette. Ein zentraler Kontaktbereich eines jeden Kabelführungselements, welcher einen Abschnitt des Zentralelements umgibt, wird als Zentralelementkontaktbereich bezeichnet. Der Zentralelementkontaktbereich umgibt einen Abschnitt des Zentralelements kraft- und/oder formschlüssig und dies bewirkt eine Fixierung des jeweiligen Kabelführungselements an dem Zentralelement.

Jedes Kabelführungselement ist zweiteilig und die beiden Teile sind lösbar zu einem Kabelführungselement kombinierbar.

Als Zentralelement kommen ein Seil, insbesondere ein Stahlseil, oder eine Gliederkette in Betracht. Bei einem zur Anbringung an einem Seil oder Stahlseil bestimmten Kabelführungselement und einer Vorrichtung mit solchen Kabelführungselementen weist jedes Kabelführungselement mittig einen Zentralelementkontaktbereich auf, welcher einen Abschnitt des Seils bzw. Stahlseils zumindest kraftschlüssig umgibt. Bei einem zur Anbringung an einer Gliederkette bestimmten Kabelführungselement und einer Vorrichtung mit solchen Kabelführungselementen weist jedes Kabelführungselement mittig einen Zentralelementkontaktbereich auf, welcher einen Abschnitt der Gliederkette zumindest formschlüssig umgibt.

Die Vorteile der hier vorgeschlagenen Kabelführungskette lassen sich stichpunktartig wie folgt zusammenfassen:
- Zusätzliche Leitungen können eingezogen, vorhandene ausgetauscht oder repariert werden,
- einfache Integration in verschiedene Mast-Typen durch vor Ort frei wählbare Zweipunkt-Befestigung möglich,
- keine Notwendigkeit von Führungselementen und Wannen,
- Zugänglichkeit zu den Leitungen ist gegeben, können visuell inspiziert werden, es gibt Wartungsmöglichkeiten,
- einfache schnelle Montage und Demontage wird ermöglicht,
- Torsion, Beweglichkeit in allen Richtungen möglich, daher unanfällig gegen Beschädigung,
- geringer Engineering- / Integrationsaufwand durch einfache Befestigung ohne vorherige genaue Positionsbestimmung bei der Integration,
- einzelne Kabel oder dergleichen können in der von der Vorrichtung bewirkten Führung frei verschoben (da nur an den Enden fixiert) bzw. auch bei einem Defekt nachgesetzt werden oder auch bei verschiedenen Anwendungstypen in der Länge (aus der Führung heraus) vor Ort angepasst werden;
- einfacher und robuster Aufbau,
- gute Wärmeabfuhr der Leitungen,
- geringeres Gewicht,
- Kostenersparnis.

Speziell für die Ausführungsform mit einer Gliederkette als Zentralelement ergeben sich weitere Vorteile:
- Jedes Kabelführungselement wird formschlüssig mit der Gliederkette in einem definierten Abstand zu einem vorangehenden Kabelführungselement verbunden, wodurch ein Verrutschen, zum Beispiel aufgrund einer nicht ausreichenden Klemmung eines Seils oder dergleichen und/oder aufgrund einer nicht ausreichenden Klemmung aufgrund einer Verjüngung eines Seils oder dergleichen (zum Beispiel durch Abnutzung oder erhöhtes Gewicht), verhindert wird;
- jedes Kabelführungselement ist einfach einzeln austauschbar, da zum Beispiel nur äußere Verbindungsschrauben zu lösen sind und diese außen leicht zugänglich sind und sich nicht im Inneren befinden, wo die Zugänglichkeit besonders nach dem Einziehen von Kabel, Schläuchen oder dergleichen stark eingeschränkt ist;
- die Vorrichtung ist insgesamt sehr leicht an einen jeweiligen Einsatzfall anpassbar, weil ein Einkürzen oder Verlängern der Gliederkette auch im Nachhinein oder vor Ort ohne spezielles Werkzeug möglich ist;
- die Gliederkette kann bei Bedarf auf einfache und grundsätzlich an sich bekannte Art und Weise mittels sogenannter Kettenverbinder repariert werden und eine solche Reparatur ist möglich, ohne die Vorrichtung insgesamt auflösen zu müssen oder Kabel oder dergleichen aus der Vorrichtung nehmen zu müssen;
- einzelne Elemente sind auch bei kompletter Bestückung z.B. mit Kabeln oder dgl. leicht austauschbar (keine erschwert zugänglichen Schrauben im Inneren);
- die Vorrichtung ist insgesamt weitestgehend wartungsfrei, insbesondere ist anders als bei zum Beispiel einem Seil als Zentralelement kein Spleiß möglich, und auch bei lang andauernder Verwendung ist nur eine geringe Zunahme der Längenausdehnung zu erwarten;
- die Vorrichtung ist darüber hinaus auch weitestgehend wartungsfrei, weil die als Zentralelement fungierende Gliederkette durch die formschlüssige Anbringung der Kabelführungselemente an der Gliederkette nicht beeinträchtigt wird, also speziell keine Beschädigung aufgrund einer bei einer Klemmung resultierenden Kraftwirkung oder einem bei einer Klemmung resultierenden Abrieb auftritt;
- die einzelnen Kabelführungselemente halten nur sich selbst auf der als Zentralelement fungierenden Gliederkette und können bei einem eventuellen Hängenbleiben bedingt durch die einzelnen Kettenglieder in einem bestimmten Maß nachgeben;
- durch das Einlassen der Kette (Negativ; Tasche, passgenaue Formung, Trägerfläche, Kabelnussprofil) in den Kabelführungselementen, nämlich dem dortigen Zentralelementkontaktbereich, ist immer ein definierter Abstand zwischen benachbarten Kabelführungselementen gewährleistet, welcher die Montage vereinfacht und eine ungleichmäßige Ausrichtung der Durchfuhröffnungen oder ein versehentliches nicht fachgerechtes Quetschen des Seils oder dergleichen verhindert.
- ein Verdrehen des Zentralelements über die Gesamtlänge wird baulich bedingt durch die einzelnen Kettenglieder nur in einem gewissen Maß zugelassen und sorgt somit für einen stabilen Lauf bei vertikaler Bewegung. Eine zusätzliche Beanspruchung der Kabel oder dgl. wird dadurch verringert. Schließlich ist die Vorrichtung insgesamt robust und im Vergleich zum Beispiel zu einer Vorrichtung mit einem Seil als Zentralelement widerstandsfähiger und unempfindlich gegen Schmutz, UV-Licht, Chemikalien, Lösungsmittel oder Mineralölprodukte.

Die abhängigen Ansprüche sind auf bevorzugte Ausführungsformen der vorliegenden Erfindung gerichtet. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- Fig. 1: eine Vorrichtung zur Führung und zum Schutz von elektrischen Leitungen, Hydraulik- und/oder Pneumatikschläuchen,
- Fig. 2: bis
- Fig. 5: ein durch Kombination zweier gleicher Teile erhältliches Kabelführungselement,
- Fig. 6: ein Detail der Darstellung in Fig. 5 sowie
- Fig. 7: und
- Fig. 8: eine spezielle Ausführungsform eines Teils eines Kabelführungselements gemäß Fig. 2 bis Fig. 5 sowie
- Fig. 9: und
- Fig. 10: ein Teil eines zum Anbringen an einer Gliederkette bestimmten Kabelführungselements.

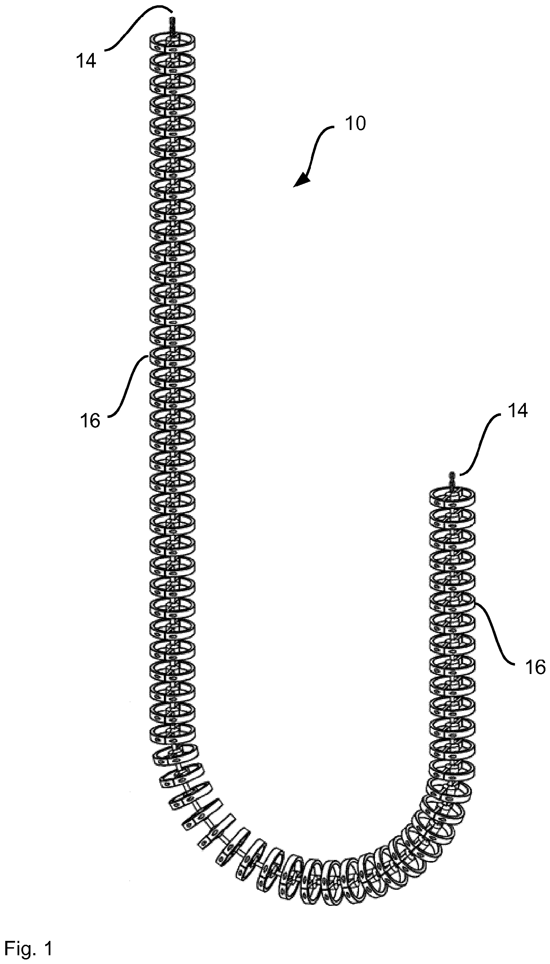

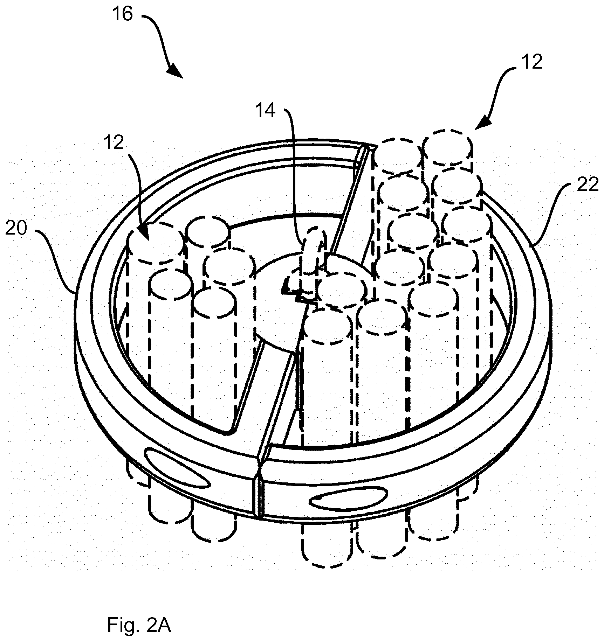

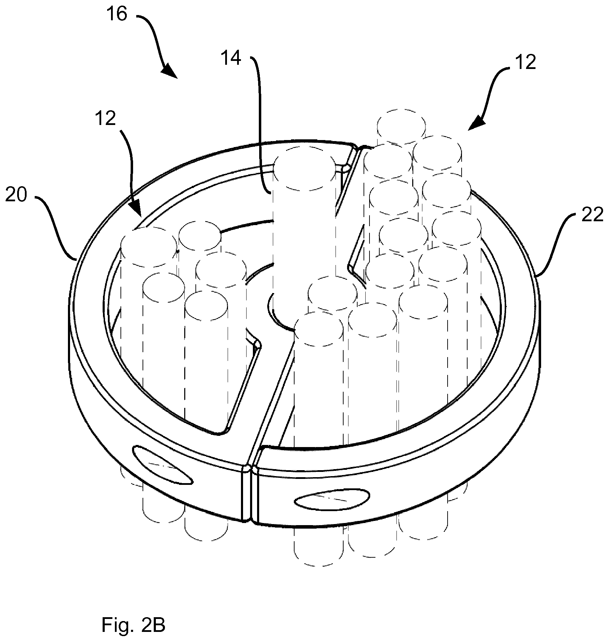

Die Darstellung in Figur 1 zeigt eine im Folgenden kurz und ohne Verzicht auf eine weitergehende Allgemeingültigkeit als Kabelführungskette 10 bezeichnete Vorrichtung 10, nämlich eine Vorrichtung 10 zur Führung und zum Schutz von Leitungen 12 (Fig. 2), insbesondere elektrischen Leitungen (Kabeln), Leitungen für Hydraulikflüssigkeit und/oder Luftdruckleitungen.

Die Kabelführungskette 10 umfasst ein zentrales lastaufnehmendes Element (Zentralelement) 14. Dabei handelt es sich zum Beispiel - wie in Figur 1 gezeigt - um eine Gliederkette oder alternativ um ein Seil, insbesondere ein Stahlseil. Als Durchmesser eines Stahlseils als Zentralelement 14 kommt ein Durchmesser von 30 mm oder im Bereich von 20 mm in Betracht. Als Stärke, Kettendurchmesser einer Gliederkette als Zentralelement 14 kommt 10mm in Betracht.

Die Kabelführungskette 10 umfasst des Weiteren eine Mehrzahl von Kabelführungselementen 16. Diese sind zum Beispiel aus einem Kunststoff gefertigt. Die Kabelführungselemente 16 haben bei der gezeigten Ausführungsform und damit in grundsätzlich optionaler Art und Weise eine scheibenförmige Hüllkontur und eine kreisförmige Außenkontur. Jedes Kabelführungselement 16 ist einzeln an dem Zentralelement 14 fixiert.

Die Kabelführungskette 10 kommt zum Beispiel für eine Verwendung in einem Mast einer Bohranlage in Betracht. Ein Ende des Zentralelements 14 der Kabelführungskette 10 (und damit ein Ende der Kabelführungskette 10 insgesamt) ist dann zum Beispiel am Mast der Bohranlage angeschlagen. Das andere Ende des Zentralelements 14 der Kabelführungskette 10 (und damit das andere Ende der Kabelführungskette 10 insgesamt) ist dann an einer im Mast vertikal beweglichen Vorrichtung, zum Beispiel einem sogenannten Topdrive, angeschlagen. Von den Kabelführungselementen 16 der Kabelführungskette 10 gehaltene Leitungen 12 werden mittels der Kabelführungskette 10 dann von einer ortsfesten Position im Mast zu der im Mast beweglichen Vorrichtung geführt, sodass die Vorrichtung in grundsätzlich an sich bekannter Art und Weise mit elektrischer Energie versorgt werden kann, mit Hydraulikflüssigkeit beaufschlagt werden kann und/oder mittels elektrischer, hydraulischer und/oder pneumatischer Steuerleitungen Steuersignale von und/oder zu der Vorrichtung übertragen werden können.

Die gegenständliche Kabelführungskette 10 kommt grundsätzlich auch für Anwendungsfälle unabhängig von einer Bohranlage in Betracht. Als im Vordergrund stehender Einsatzfall wird zumindest gegenwärtig aber eine hängende Konfiguration angesehen (so wie dies in der Darstellung in Figur 1 durch die dort gezeigte Orientierung der Kabelführungskette 10 gezeigt ist), also eine Konfiguration, bei der die an den beiden Enden des Zentralelements 14 angeschlagene (fixierte) Kabelführungskette 10 ansonsten frei hängt oder zumindest im Wesentlichen frei hängt und das Zentralelement 14 die Last einerseits der Kabelführungskette 10 selbst und andererseits zumindest zum Teil die Last der mittels der Kabelführungskette 10 geführten Leitungen 12 aufnimmt.

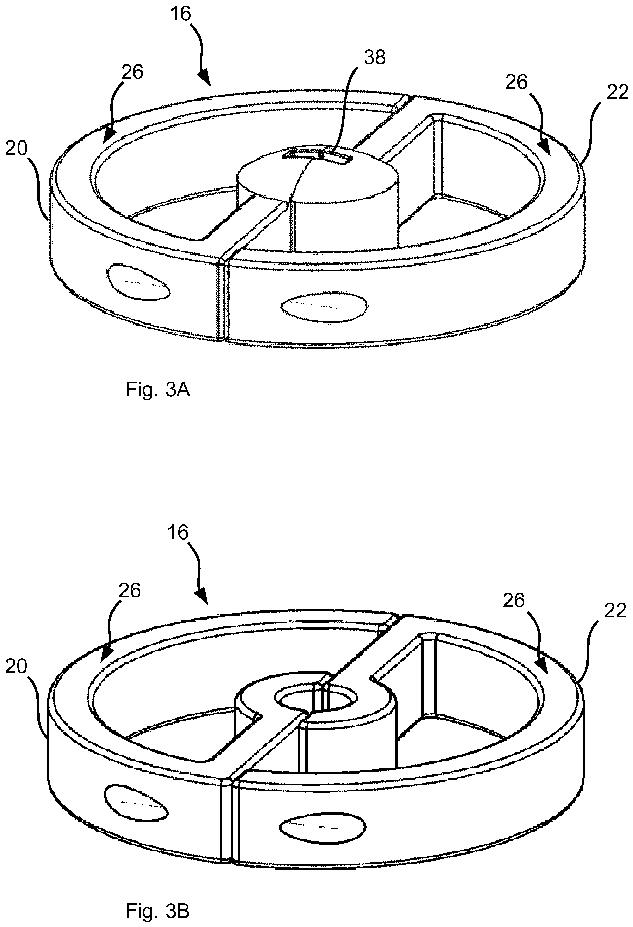

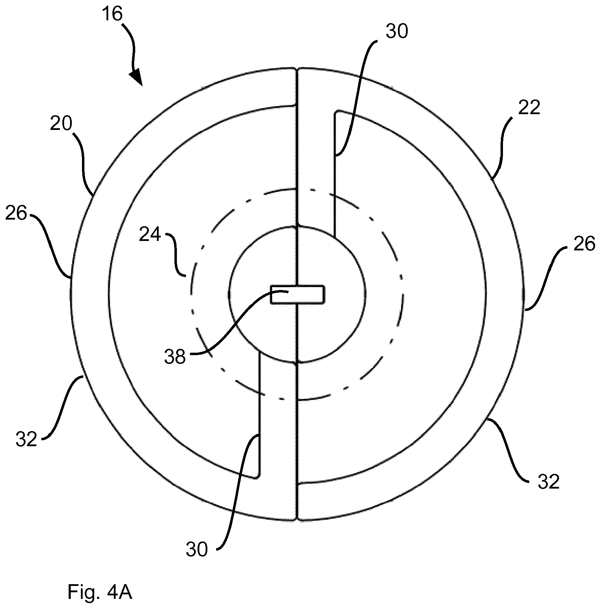

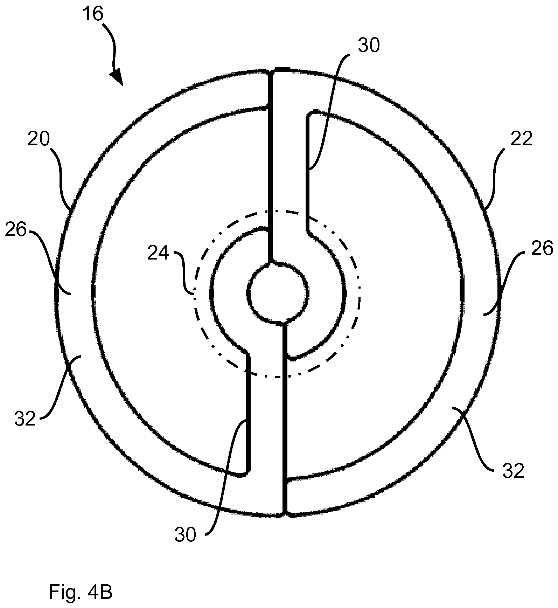

Die Darstellungen in Figur 2 (Fig. 2A, 2B), Figur 3 (Fig. 3A, 3B) und Figur 4 (Fig. 4A, 4B) zeigen jeweils ein einzelnes Kabelführungselement 16. Dort sind die - grundsätzlich optionale - scheibenförmige Hüllkontur und die kreisförmige Außenkontur des Kabelführungselements 16 erkennbar. Des Weiteren ist erkennbar, dass bei der gezeigten Ausführungsform ein Kabelführungselement 16 in grundsätzlich optionaler Art und Weise zwei gleiche Teile 20, 22 (identische Form, identische Dimension) umfasst und sich das Kabelführungselement 16 durch eine Kombination dieser beiden gleichen Teile 20, 22 ergibt. Bei einem Kabelführungselement 16 mit einer scheibenförmigen Hüllkontur hat jedes Teil 20, 22 eine im Wesentlichen halbkreisförmige Grundfläche.

Im Interesse einer besseren Lesbarkeit der weiteren Beschreibung wird diese am Beispiel von Kabelführungselementen 16 mit einer scheibenförmigen Hüllkontur fortgesetzt. Grundsätzlich kommen auch andere Geometrien in Betracht, zum Beispiel im Wesentlichen scheibenförmige Geometrien mit einer polygonalen Außenkontur. Solche Geometrien sind im Folgenden stets mitzulesen, wenn kreis- oder kreisbogenförmige Geometrien beschrieben werden.

Die Darstellung in Figur 2A zeigt ein einzelnes Kabelführungselement 16 mit einer Gliederkette als Zentralelement 14. Die Darstellung in Figur 2B zeigt ein einzelnes Kabelführungselement 16 mit einem Seil, zum Beispiel einem Seil in einer Ausführung als Stahlseil, als Zentralelement 14. Die beiden Kabelführungselemente 16 sind abgesehen von einer Anpassung zur Aufnahme des jeweiligen Zentralelements 14 identisch.

Jedes Kabelführungselement 16 weist mittig einen Zentralelementkontaktbereich 24 (Fig. 4A) auf, welcher einen Abschnitt des Zentralelements 14 umgibt. Mittels des Zentralelementkontaktbereichs 24 ist das Kabelführungselement 16 an dem Zentralelement 14 fixierbar und bei einer gebrauchsfähigen Kabelführungskette 10 am Zentralelement 14 fixiert.

Neben dem Zentralelementkontaktbereich 24 weist jedes Kabelführungselement 16 einen den Zentralelementkontaktbereich 24 in einem Abstand umgebenden Kabelführungsrand 26 Figur (Fig. 3A,3B) und Figur 4 (Fig. 4A, 4B) auf. In dem Bereich zwischen Zentralelementkontaktbereich 24 und Kabelführungsrand 26 kann eine Mehrzahl von quer zur Ebene des jeweiligen Kabelführungselements 16 geführten Leitungen 14 aufgenommen werden, wie dies in der Darstellung in Figur 2 gezeigt ist.

Die zum Zentralelementkontaktbereich 24 weisende Oberfläche des Kabelführungsrands 26 bewirkt die eigentliche Führung der mittels der Kabelführungskette 10 geführten Leitungen 12. Die nach außen weisende Oberfläche des Kabelführungsrands 26 bewirkt den Schutz der mittels der Kabelführungskette 10 geführten Leitungen 12. In einem vertikal hängenden Abschnitt der Kabelführungskette 10 bewirkt der Kabelführungsrand 26, dass die Leitungen 12 sicher im Bereich eines durch den Durchmesser der Kabelführungselemente 16 bestimmten (gedachten) Zylinders bleiben. Im Bereich eines "Bauchs" zwischen den an die Anschlagspunkte des Zentralelements 14 (die Anschlagspunkte der Kabelführungskette 10) angrenzenden vertikal hängenden Abschnitten einer Kabelführungskette 10 liegen die Leitungen 12 zumindest zum Teil auf der zum Zentralelementkontaktbereich 24 weisenden Oberfläche des Kabelführungsrands 26 oder anderen Abschnitten der Kabelführungselemente 16 an oder auf, sodass die Kabelführungskette 10 zumindest zum Teil auch das Gewicht der damit geführten Leitungen 12 aufnimmt.

In der Darstellung in Figur 4 (Fig. 4A, 4B), welche ein Kabelführungselement 16 in einer Draufsicht zeigt, ist besonders gut erkennbar, dass es sich bei den beiden Teilen 20, 22 um gleiche Teile handelt, also Teile 20, 22 mit gleicher Form / Geometrie / Dimension. Die beiden Teile 20, 22 sind zu einem Kabelführungselement 16 kombinierbar, indem eines der beiden Teile 20, 22 relativ zu dem anderen Teil um 180° gedreht wird.

Mit anderen Worten lässt sich dies auch wie folgt ausdrücken: Jedes der beiden zu einem Kabelführungselement 16 kombinierbaren Teile 20, 22 weist eine Außenseite mit einem Abschnitt des Kabelführungsrands 26 und eine Innenseite mit einem Abschnitt des Zentralelementkontaktbereichs 24 auf und die beiden Teile 20, 22 sind zu einem Kabelführungselement 16 kombinierbar, indem eines der beiden Teile 20, 22 relativ zu dem anderen Teil 20, 22 so gedreht wird, dass die beiden Innenseiten einander zugewandt sind.

Bei der in den Figuren gezeigten Ausführungsform ist jedes Kabelführungselement 16 einzeln an dem Zentralelement 14 fixierbar, indem das Zentralelement 14 mittels des Zentralelementkontaktbereichs 24 form- und/oder kraftschlüssig eingeschlossen und ggf. geklemmt wird.

Die Darstellungen in Figur 3A und 4A zeigen jeweils ein zur Fixierung an einer Gliederkette als Zentralelement 14 bestimmtes Kabelführungselement 16 mit einem auf ein solches Zentralelement 14 abgestimmten Zentralelementkontaktbereich 24. Die Darstellungen in Figur 3B und 4B zeigen jeweils ein zur Fixierung an einem Seil, insbesondere einem Stahlseil, als Zentralelement 14 bestimmtes Kabelführungselement 16 mit einem auf ein solches Zentralelement 14 abgestimmten Zentralelementkontaktbereich 24.

Erkennbar (Figur 3 (Figur 3A, 3B); Figur 4 (Figur 4A, 4B)) schließt der Zentralelementkontaktbereich 24 einen im Zentrum freibleibenden Abschnitt ein. Dieser freie Bereich ist für das Zentralelement 14 vorgesehen. Beim Kombinieren der beiden Teile 20, 22 zu einem Kabelführungselement 16 werden die beiden Teile 20, 22 mit dem Zentralelementkontaktbereich 24 um das jeweilige Zentralelement 14 gelegt, so dass das Zentralelement 14 vom Zentralelementkontaktbereich 24 eingeschlossen ist.

Bei einer Gliederkette als Zentralelement 14 (Fig. 2A etc.) ist die Innenoberfläche des freien Bereichs im Zentrum des Zentralelementkontaktbereichs 24 zumindest abschnittsweise zur formschlüssigen Aufnahme eines Abschnitts eines solchen Zentralelements 14 ausgestaltet. Insoweit weist die Innenoberfläche des freien Bereichs im Zentrum des Zentralelementkontaktbereichs 24 zumindest abschnittsweise zumindest eine muldenförmige Vertiefung oder mehrere muldenförmige Vertiefungen auf. Die oder jede Vertiefung (kann auch als Tasche bezeichnet werden) ist zur Aufnahme jeweils zumindest eines Abschnitts einer als Zentralelement 14 fungierenden Gliederkette bestimmt und entsprechend dimensioniert. Die oder jede Vertiefung ist insbesondere zur Aufnahme jeweils zumindest eines Abschnitts genau eines Glieds oder zur Aufnahme jeweils genau eines Glieds einer als Zentralelement 14 fungierenden Gliederkette bestimmt und entsprechend dimensioniert. Ein entsprechendes Profil in der Innenoberfläche des freien Bereichs im Zentrum des Zentralelementkontaktbereichs 24 ist ein Profil, wie dies grundsätzlich zum Beispiel von einer sogenannten Kettennuss oder einem Kettenrad für zum Beispiel Ankerketten oder dergleichen bekannt ist. Das Profil in der Innenoberfläche des freien Bereichs im Zentrum des Zentralelementkontaktbereichs 24 wird entsprechend kurz als Kettennussprofil bezeichnet. Jedes Kabelführungselement 16 weist also in der Innenoberfläche des freien Bereichs im Zentrum des Zentralelementkontaktbereichs 24 ein Kettennussprofil oder einen Abschnitt eines Kettennussprofils auf. Mittels des Kettennussprofils ergibt sich unmittelbar beim Verbinden der beiden Teile 20, 22 des Kabelführungselements 16 miteinander eine zumindest formschlüssige Fixierung des Kabelführungselements 16 am Zentralelement 14 (an der Gliederkette) und damit einhergehend eine axiale Fixierung (axial entlang des Zentralelements 14) des Kabelführungselements 16 am Zentralelement 14. Alle in dieser Form am Zentralelement 14 angebrachten Kabelführungselemente 16 sind entlang des Zentralelements 14 nicht mehr beweglich (axial fixiert) und damit auch relativ zueinander in einem fixen Abstand am Zentralelement 14 fixiert.

Bei einem Seil oder Stahlseil als Zentralelement 14 (Fig. 2B etc.) ist vorgesehen, dass der Durchmesser des freien Bereichs im Zentrum des Zentralelementkontaktbereichs 24 zumindest geringfügig kleiner als der Durchmesser des Zentralelements 14 ist. Dann ergibt sich unmittelbar beim Verbinden der beiden Teile 20, 22 des Kabelführungselements 16 miteinander eine kraftschlüssige Fixierung des Kabelführungselements 16 am Zentralelement 14 und damit einhergehend eine axiale Fixierung des Kabelführungselements 16 am Zentralelement 14. Alle in dieser Form am Zentralelement 14 angebrachten Kabelführungselemente 16 sind ebenfalls entlang des Zentralelements 14 nicht mehr beweglich und damit auch relativ zueinander in einem fixen Abstand am Zentralelement 14 fixiert.

Speziell bei einem als Zentralelement 14 fungierenden Stahlseil kommt optional in Betracht, dass die nach innen weisenden Oberflächen des Zentralelementkontaktbereichs 24 eine strukturierte Oberfläche aufweisen (zum Beispiel eine Oberfläche ähnlich dem sogenannten Hieb auf dem Blatt einer Feile), sodass sich ein besonders guter Reibschluss ergibt und die Fixierung an dem Zentralelement 14 damit besonders belastbar ist.

Bei der gezeigten Ausführungsform zeichnet sich jedes Kabelführungselement 16 - in grundsätzlich optionaler Art und Weise - dadurch aus, dass dessen Kabelführungsrand 26 und dessen Zentralelementkontaktbereich 24 relativ zueinander so ausgerichtet sind, dass der von dem Zentralelementkontaktbereich 24 umgebene Abschnitt des Zentralelements 14 senkrecht auf einer durch den Kabelführungsrand 26 definierten Ebene steht. In einem vertikal hängenden Abschnitt der Kabelführungskette 10 sind damit die Kabelführungselemente 16 parallel oder zumindest im Wesentlichen parallel zueinander ausgerichtet.

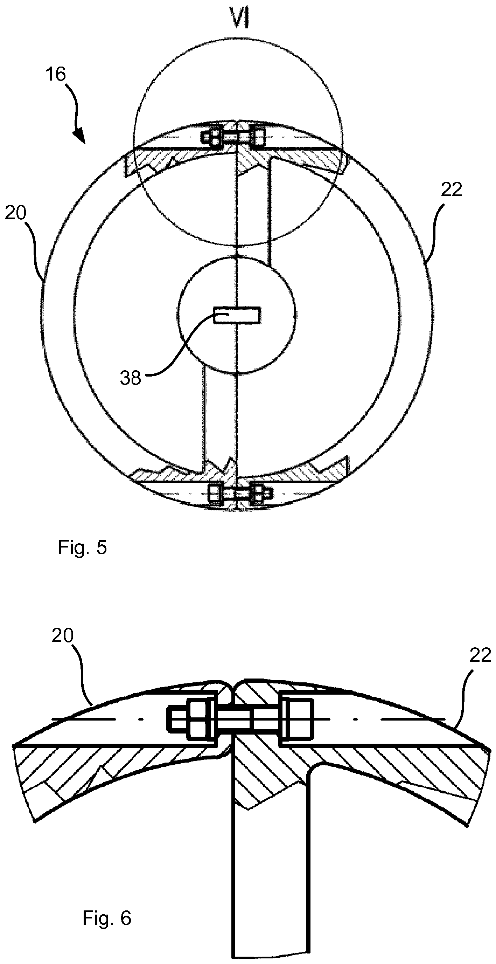

Die Darstellungen in Figur 5 und Figur 6 zeigen (am Beispiel eines Kabelführungselements 16 für eine Gliederkette), dass bei der gezeigten Ausführungsform die beiden Teile 20, 22 des zweiteiligen Kabelführungselements 16 lösbar miteinander verbindbar sind und lösbar zu einem Kabelführungselement 16 kombinierbar sind. Zum lösbaren Verbinden der beiden Teile 20, 22 ist bevorzugt zumindest eine Schraubverbindung vorgesehen, wie dies insbesondere in der Darstellung in Figur 6 erkennbar ist, welche in vergrößerter Form den in Figur 5 mit "VI" markierten Ausschnitt zeigt.

Bei der gezeigten Ausführungsform sind die beiden Teile 20, 22 des Kabelführungselements 16 mittels lediglich zweier Schraubverbindungen (siehe Figur 5) zu einem Kabelführungselement 16 verbindbar und im gebrauchsfertigen Zustand mittels dieser Schraubverbindungen und unter Einschluss des jeweiligen Zentralelements 14 zu einem Kabelführungselement 16 verbunden. Grundsätzlich kommen auch mehr als zwei Schraubverbindungen in Betracht, zum Beispiel beidseitig jeweils zwei Schraubverbindungen. Jedenfalls wird bei einem mit dem Zentralelementkontaktbereich 24 um ein Zentralelement 14 gelegten Kabelführungselement 16 gleichzeitig mit dem Festziehen der Schraubverbindungen die Fixierung des Kabelführungselements 16 an dem Zentralelement 14 bewirkt, nämlich bei einer Gliederkette als Zentralelement 14 die zumindest formschlüssige Kontaktierung eines Abschnitts der Gliederkette mittels des Kettennussprofils und bei einem Seil oder Stahlseil als Zentralelement die zumindest kraft- und/oder reibschlüssige Kontaktierung eines Abschnitts des Seils bzw. Stahlseils. Dazu ist vorgesehen, dass jedes der beiden zu einem Kabelführungselement 16 kombinierbaren Teile 20, 22 einen Arm 30 (Fig. 4A) und als Teil des Kabelführungsrands 26 einen (halbkreisförmigen oder im Wesentlichen halbkreisförmigen) Kabelführungsabschnitt 32 aufweist. Ein freies Ende jedes Arms 30 läuft in einen Abschnitt des Zentralelementkontaktbereichs 24 aus. Bei einem Kabelführungselement 16 für ein Seil oder Stahlseil ist dieses freie Ende ebenfalls halbkreisförmig oder im Wesentlichen halbkreisförmig.

An einem dem freien Ende mit dem Abschnitt des Zentralelementkontaktbereichs 24 gegenüberliegenden Ende geht der Arm 30 einstückig in den Kabelführungsabschnitt 32 über. Bei zwei mittels zweier Schraubverbindungen zu einem Kabelführungselement 16 kombinierten Teilen 20, 22 sind deren Kabelführungsabschnitte 32 miteinander verbunden (die beiden zu einem Kabelführungselement 16 kombinierbaren Teile 20, 22 sind jeweils im Bereich des Kabelführungsrands 26 lösbar miteinander verbindbar und im gebrauchsfertigen Zustand miteinander verbunden), sodass sich ein umlaufender Kabelführungsrand 26 ergibt. Die Arme 30 sind von dieser Fixierung selbst nicht betroffen und jeder Arm 30 ist im Rahmen der Materialeigenschaften elastisch beweglich, fungiert also als Federelement. Die Arme 30 schließen mit den an ihren Enden befindlichen Abschnitten des Zentralelementkontaktbereichs 24 das Zentralelement 14 ein. Die Fixierung des Kabelführungselements 16 am Zentralelement 14 ergibt sich im Falle eines Seils oder Stahlseils als Zentralelement 14 durch die dabei beidseitig auf die Oberfläche des Zentralelements 14 ausgeübte Kraft. Im Falle einer Gliederkette als Zentralelement 14 ergibt sich Fixierung des Kabelführungselements 16 am Zentralelement 14 durch den formschlüssigen Einschluss eines Abschnitts der Gliederkette mittels des Zentralelementkontaktbereichs 24. Dieser wird aufgrund der Federkraft der Arme 30 zusammengehalten.

Mit anderen Worten ausgedrückt kann gesagt werden, dass jedes der beiden zu einem Kabelführungselement 16 kombinierbaren Teile 20, 22 einen Abschnitt, insbesondere eine Hälfte, des Zentralelementkontaktbereichs 24 und einen Abschnitt, insbesondere eine Hälfte, des Kabelführungsrands 26 aufweist, wobei die beiden Abschnitte jeweils mittels des Arms 30 miteinander verbunden sind. Jedes Teil 20, 22 umfasst also einen äußeren halbkreisförmigen oder zumindest im Wesentlichen halbkreisförmigen Abschnitt, nämlich jeweils eine Hälfte des Kabelführungsrands 26 (Kabelführungsabschnitt 32), und einen inneren Abschnitt, nämlich jeweils eine Hälfte des Zentralelementkontaktbereichs 24. Diese beiden Abschnitte sind mit dem Arm 30 einstückig verbunden und bilden mittels des Arms 30 ein einstückiges Teil 20, 22.

Bevorzugt sind die beiden Teile 20, 22 zum Erhalt einer möglichst großen Kraftwirkung auf das eingeschlossene Zentralelement 14 oder zumindest in Richtung auf das jeweils eingeschlossene Zentralelement 14 dabei so ausgeführt, dass beim Kombinieren der Teile 20, 22 ein Verbiegen im Bereich der Arme 30 resultiert. Die Rückstellkraft des Materials der Arme 30 bewirkt dann eine zusätzliche Kraftwirkung auf das eingeschlossene Zentralelement 14 oder zumindest in Richtung auf das jeweils eingeschlossene Zentralelement 14.

Bei einem Kabelführungselement 16 für ein Seil oder Stahlseil sind dafür die beiden Abschnitte des Zentralelementkontaktbereichs 24 zum Beispiel so ausgeführt, dass diese einen Bereich einschließen, dessen Durchmesser zumindest geringfügig kleiner ist als der Durchmesser des Seils bzw. Stahlseils. Eine zusätzliche oder alternative Möglichkeit zum Erhalt einer solchen zusätzlichen Kraftwirkung besteht in einer Ausführung, bei der die Abschnitte des Zentralelementkontaktbereichs 24 und die Kabelführungsabschnitte 32 zum Beispiel so dimensioniert sind, dass die Kreisbögen außen an den Kabelführungsabschnitten 32 und innen an den Abschnitten des Zentralelementkontaktbereichs 24 jeweils einen Mittelpunktswinkel von knapp unter 180° einschließen. Das Kabelführungselement 16 und auch der Zentralelementkontaktbereich 24 sind dann mit ihren jeweiligen Außenumfangslinien nicht mehr exakt kreisförmig.

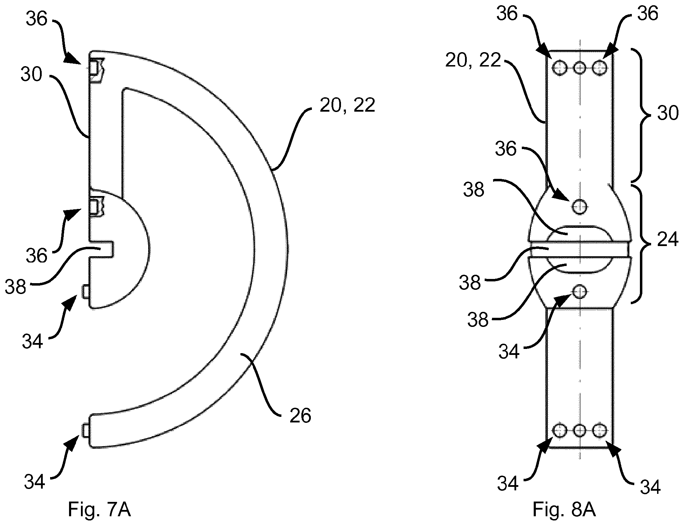

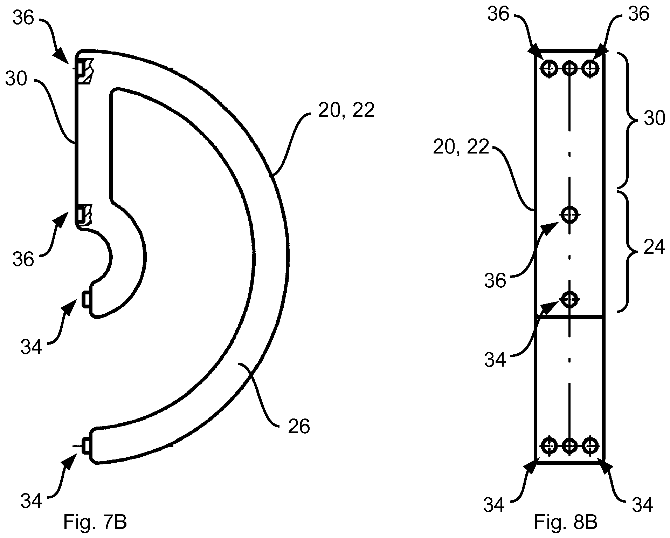

Bei einer bevorzugten, aber grundsätzlich optionalen Ausführungsform der Kabelführungselemente 16 ist vorgesehen, dass die beiden zu einem Kabelführungselement 16 kombinierbaren Teile 20, 22 in den beim Kombinieren einander zugewandten Oberflächen Justierkonturen 34, 36 (Fig. 7, Fig. 8; Fig. 7A, 8A zeigen die Ausführungsform für eine Gliederkette, Fig. 7B, 8B zeigen die Ausführungsform für ein Seil/Stahlseil) aufweisen, die beim Kombinieren formschlüssig ineinander greifen. Als Justierkonturen 34, 36 kommen zum Beispiel ein Zapfen sowie eine zur formschlüssigen Aufnahme des Zapfens bestimmte Ausnehmung in Betracht. Eines der beiden Teile 20, 22 weist dann einen solchen Zapfen oder Ähnliches auf. Das andere Teil 20, 22 weist dann die zur formschlüssigen Aufnahme des Zapfens oder dergleichen bestimmte Ausnehmung auf.

Die Darstellungen in Figur 7 und Figur 8 zeigen ein zusammen mit einem anderen, gleichen Teil 20, 22 zu einem Kabelführungselement 16 kombinierbares Teil 20, 22 mit solchen Justierkonturen 34, 36 - also eine spezielle Ausführungsform eines der in den Darstellungen in Figur 2 bis Figur 5 gezeigten Teile 20, 22. Die Darstellung in Figur 7 (Fig. 7A, 7B) zeigt das Teil 20, 22 in einer teilweise geschnittenen Draufsicht. Die Darstellung in Figur 8 (Fig. 7B, 8B) zeigt das Teil 20, 22 mit einem Blick auf diejenige Oberfläche ("Innenseite"), welche beim Kombinieren mit einem anderen Teil 20, 22 diesem zugewandt ist.

Allgemein kann ein als Justierkontur 34 fungierender Zapfen oder dergleichen als Formschlusselement 34 und eine als Justierkontur 36 fungierende korrespondierende Ausnehmung als Formschlussgegenelement 36 bezeichnet werden. Indem zum Erhalt eines Kabelführungselements 16 beim Kombinieren das (an einem der beiden Teile 20, 22 befindliche) Formschlusselement 34 und das (an dem anderen Teil 20, 22 befindliche) Formschlussgegenelement 36 formschlüssig ineinandergreifen ist im Bereich des Formschlusses eine exakte Justierung der beiden Teile 20, 22 zueinander gewährleistet.

Bei der gezeigten Ausführungsform ist in grundsätzlich optionaler Art und Weise vorgesehen, dass jedes Teil 20, 22 einerseits am freien Ende von dessen Kabelführungsabschnitt 32 eine Justierkontur 34, 36 (ein Formschlusselement 34) und im Bereich des Übergangs des Kabelführungsabschnitts 32 in den Arm 30 eine weitere Justierkontur 34, 36 (ein Formschlussgegenelement 36) aufweist. Aufgrund der - wie oben beschrieben - beim Kombinieren zu einem Kabelführungselement 16 zueinander um 180° gedrehten Teile 20, 22 kommt bei diesem Kombinieren jeweils ein Formschlusselement 34 mit einem korrespondierenden Formschlussgegenelement 36 des anderen Teils 20, 22 in Kontakt. Diese - bezogen auf den Kabelführungsabschnitt 32 - beidseitige Anordnung der Justierkonturen 34, 36 gewährleistet beim Kombinieren zweier Teile 20, 22 eine exakte Justierung der beiden Kabelführungsabschnitte 32 zueinander.

Bei der exemplarisch als Ausführungsbeispiel gezeigten Ausführungsform ist in grundsätzlich optionaler Art und Weise vorgesehen, dass jedes Teil 20, 22 als bezüglich des Kabelführungsabschnitts 32 beidseitige Justierkonturen 34, 36 jeweils zwei Formschlusselemente 34 und korrespondierend zwei Formschlussgegenelemente 36 aufweist. Dazu wird auf die Darstellung in Figur 8 (Fig. 8A, 8B) verwiesen. Diese zeigt am oberen und am unteren Rand der dargestellten Innenseite beidseitig einer mit gestrichelten Linien eingezeichneten Mittellängsachse Formschlusselemente 34 und Formschlussgegenelemente 36 (der von den Darstellungen der Formschluss- / Formschlussgegenelemente 34, 36 eingeschlossene Kreis stellt die Bohrung zur Aufnahme der Schraubverbindung (Fig. 6) dar). Dabei kommt es nur auf eine paarige und korrespondierende Anordnung an. Insofern könnten auch auf jeder Seite jeweils ein Formschlusselement 34 und ein Formschlussgegenelement 36 vorgesehen sein.

Eine entsprechende beidseitige Anordnung von Justierkonturen 34, 36 ist optional zusätzlich oder alternativ auch für den von jedem Teil 20, 22 umfassten Abschnitt des Zentralelementkontaktbereichs 24 vorgesehen, also zum Beispiel ein Formschlusselement 34 an dessen freiem Ende und ein korrespondierendes Formschlussgegenelement 36 im Bereich des Übergangs zum Arm 30. Die Darstellung in Figur 8 (Figur 8A, 8B) zeigt, dass diese Justierkonturen 34, 36 zum Beispiel entlang der dort eingezeichneten Mittellängsachse platziert sein können. Auch hier kommt eine paarige Anordnung - wie oben beschrieben - in Betracht. Auch hier bewirken die Justierkonturen 34, 36 eine exakte Justierung der beiden damit versehenen Abschnitte des Zentralelementkontaktbereichs 24 zueinander. Dies gewährleistet einen beidseitigen, vollflächigen Einschluss des jeweiligen Zentralelements 14 mittels des Zentralelementkontaktbereichs 24.

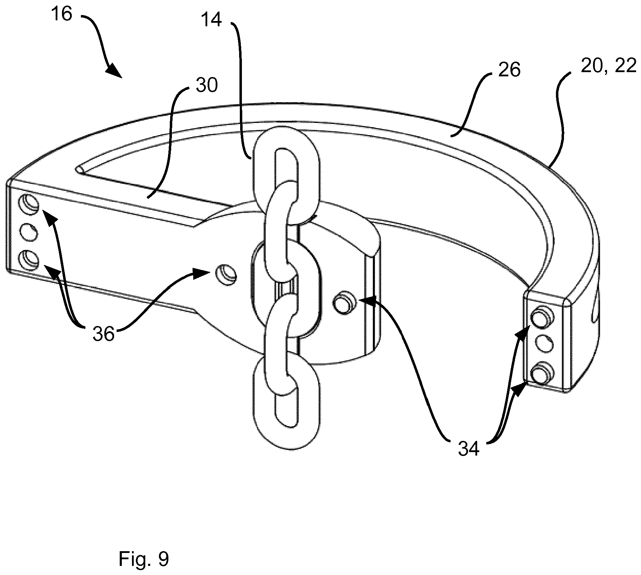

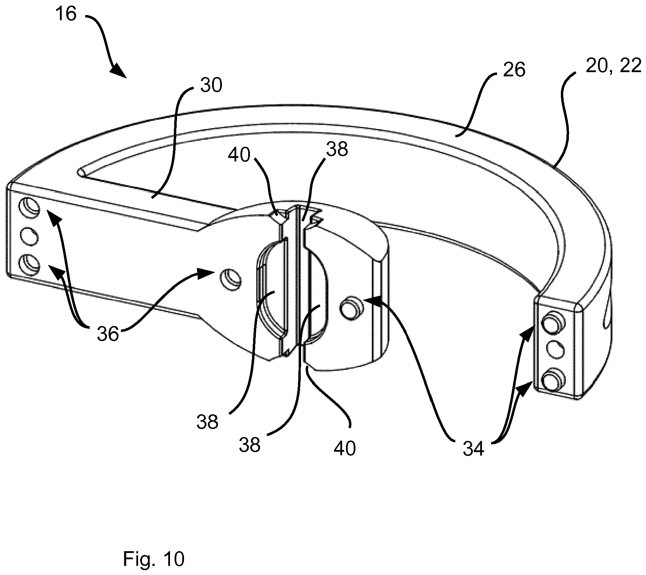

Die Darstellungen in Figur 9 und Figur 10 zeigen jeweils ein Teil 20, 22 eines Kabelführungselements 16, nämlich ein Teil 20, 22 von zwei gleichen Teilen 20, 22, die zusammen ein Kabelführungselement 16 ergeben. Die Darstellungen in Figur 9 und Figur 10 zeigen die Ausführungsform für eine Gliederkette als Zentralelement 14 und in der Darstellung in Figur 9 ist eine im Zentralelementkontaktbereich 24 am Ende des Arms 30 aufgenommene Gliederkette gezeigt. Diese Aufnahme erfolgt in einem zur formschlüssigen Aufnahme zumindest eines Abschnitts der Gliederkette geeigneten Profil, nämlich einem sogenannten Kabelnussprofil 38 (Fig. 10). Bei der gezeigten Ausführungsform ist das Kabelnussprofil 38 so dimensioniert, dass ein Glied der Gliederkette vollständig formschlüssig aufgenommen wird und die an das vollständig formschlüssig aufgenommene Glied anschließenden Glieder zumindest teilweise formschlüssig aufgenommen werden. Bei der gezeigten Ausführungsform ist der Zentralelementkontaktbereich 24 in grundsätzlich optionaler Art und Weise in Richtung der Längserstreckung des Zentralelement 14 (in Richtung der Längserstreckung der Gliederkette) konvex gewölbt. Im Bereich der Öffnung des Kabelnussprofils 38 ist eine grundsätzlich optionale Ausformung 40 gebildet, die den herausguckenden Kettengliedern mehr freien Spielraum gibt und somit auch der gesamten Gliederkette. Dadurch wird vorteilhaft vermieden, dass der Kunststoff der Kabelführungselement 16 durch Bewegung der Gliederkette in Mitleidenschaft gezogen wird.

Zur Aufnahme des vollständig formschlüssig aufgenommenen Glieds der Gliederkette umfasst das Kabelnussprofil 38 eine Mulde oder Tasche, deren Ebene entlang der Längserstreckung des Arms 30 ausgerichtet ist. Komplettiert wird das Kabelnussprofil 38 durch eine mittig zu der Mulde angeordnete und über die Tiefe der Mulde hinausgehende schlitzförmige Ausnehmung. Diese Ausnehmung ist zur Aufnahme zumindest eines Abschnitts derjenigen Kettenglieder bestimmt, die an das in der Mulde aufgenommene Kettenglied anschließen. Beide Teile 20, 22 des Kabelführungselements 16 umfassen jeweils eine solche Mulde und eine solche Ausnehmung und das Volumen der Mulden in beiden Teilen 20, 22 erlaubt die formschlüssige Aufnahme des Kettenglieds (für die an die Mulde oder an die Muldenteile anschließende Ausnehmung bzw. Ausnehmungen gilt dies entsprechend). Jedes Teil 20, 22 weist also gewissermaßen eine Hälfte des Kabelnussprofils 38 auf und das vollständige Kabelnussprofil 38 ergibt sich beim Kombinieren zweier Teile 20, 22 zu einem Kabelführungselement 16.

In den Darstellungen, welche zwei zu einem Kabelführungselement 16 kombinierte Teile 20, 22 zeigen - zum Beispiel Figur 2A, Figur 4A - ist jeweils nur das obere Ende der Ausnehmung in jedem Teil 20, 22 erkennbar und dort erscheint das Kabelnussprofil 38 als Schlitz.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Angegeben wird eine hier als Kabelführungskette 10 bezeichnete Vorrichtung 10 zur Führung von Leitungen 12, welche ein Zentralelement 14 und eine Mehrzahl von an dem Zentralelement 14 fixierten Kabelführungselementen 16 aufweist, wobei jedes Kabelführungselement 16 einen Zentralelementkontaktbereich 24 aufweist, welcher einen Abschnitt des Zentralelements 14 umgibt und wobei jedes Kabelführungselement 16 einen den Zentralelementkontaktbereich 24 in einem Abstand umgebenden Kabelführungsrand 26 aufweist.

### Bezugszeichenliste

- 10: Vorrichtung, Kabelführungskette
- 12: Leitung
- 14: Zentralelement, zum Beispiel Seil, insbesondere Stahlseil, oder Gliederkette
- 16: Kabelführungselement
- 18: (frei)
- 20,22: Teil (zusammen mit einem anderen, gleichen Teil zu einem Kabelführungselement kombinierbares Teil)
- 24: Zentralelementkontaktbereich
- 26: Kabelführungsrand
- 28: (frei)
- 30: Arm
- 32: Kabelführungsabschnitt
- 34: Justierkontur, Formschlusselement
- 36: Justierkontur, Formschlussgegenelement
- 38: Kabelnussprofil
- 40: Ausformung

## Patentansprüche

1. Vorrichtung (10) zur Führung von Leitungen (12),
mit einem zugfesten Zentralelement (14) und einer Mehrzahl von an dem Zentralelement (14) fixierten Kabelführungselementen (16),
wobei jedes Kabelführungselement (16) mittig einen Zentralelementkontaktbereich (24) aufweist, welcher einen Abschnitt des Zentralelements (14) kraft- und/oder formschlüssig umgibt und
wobei jedes Kabelführungselement (16) einen den Zentralelementkontaktbereich (24) in einem Abstand umgebenden Kabelführungsrand (26) aufweist,
**dadurch gekennzeichnet,**
**dass** jedes Kabelführungselement (16) zweiteilig ist und die beiden Teile (20, 22) lösbar zu einem Kabelführungselement (16) kombinierbar sind.

2. Vorrichtung (10) nach Anspruch 1,
wobei jedes Kabelführungselement (16) zweiteilig ist, die beiden Teile (20, 22) des Kabelführungselements (16) eine identische Form aufweisen und wobei die beiden Teile (20, 22) zu einem Kabelführungselement (16) kombinierbar sind, indem eines der beiden Teile (20, 22) relativ zu dem anderen Teil (20, 22) um 180° gedreht wird.

3. Vorrichtung (10) nach Anspruch 1 oder 2,
wobei jedes der beiden zu einem Kabelführungselement (16) kombinierbaren Teile (20, 22) eine Außenseite mit einem Abschnitt des Kabelführungsrands (26) und eine Innenseite mit einem Abschnitt des Zentralelementkontaktbereichs (24) aufweist,
wobei die beiden Teile (20, 22) zu einem Kabelführungselement (16) kombinierbar sind, indem eines der beiden Teile (20, 22) relativ zu dem anderen Teil (20, 22) so gedreht wird, dass die beiden Innenseiten einander zugewandt sind.

4. Vorrichtung (10) nach einem der vorangehenden Ansprüche,
wobei jedes Kabelführungselement (16) einzeln an dem Zentralelement (14) fixierbar ist, indem der Zentralelementkontaktbereich (24) das Zentralelement (14) form- und/oder kraftschlüssig umschließt.

5. Vorrichtung (10) nach Anspruch 4,
wobei bei jedem Kabelführungselement (16) dessen Kabelführungsrand (26) und dessen Zentralelementkontaktbereich (24) relativ zueinander so ausgerichtet sind, dass der von dem Zentralelementkontaktbereich (24) umgebene Abschnitt des Zentralelements (14) senkrecht auf einer durch den Kabelführungsrand (26) definierten Ebene steht.

6. Vorrichtung (10) nach einem der vorangehenden Ansprüche,
wobei jedes der beiden zu einem Kabelführungselement (16) kombinierbaren Teile (20, 22) einen Arm (30) und einen Kabelführungsabschnitt 32 aufweist,
wobei ein freies Ende des Arms (30) in einen Abschnitt des Zentralelementkontaktbereichs (24) ausläuft und
wobei der Arm (30) an einem dem freien Ende mit dem Abschnitt des Zentralelementkontaktbereichs (24) gegenüberliegenden Ende einstückig in den Kabelführungsabschnitt (32) übergeht.

7. Vorrichtung (10) nach einem der vorangehenden Ansprüche,
wobei die beiden zu einem Kabelführungselement (16) kombinierbaren Teile (20, 22) jeweils im Bereich des Kabelführungsrands (26) lösbar miteinander verbindbar sind.

8. Vorrichtung (10) nach einem der vorangehenden Ansprüche,
wobei jedes der beiden zu einem Kabelführungselement (16) kombinierbaren Teile (20, 22) beim Kombinieren formschlüssig ineinander greifende Justierkonturen (34, 36) aufweist.

9. Vorrichtung (10) nach einem der vorangehenden Ansprüche,
wobei als Zentralelement (14) eine Gliederkette fungiert und
wobei jedes Kabelführungselement (16) zur formschlüssigen Aufnahme zumindest eines Abschnitts eines solchen Zentralelements (14) ein Kabelnussprofil (38) aufweist.

## Claims

1. A device (10) for guiding lines (12),
with a tension-resistant central element (14) and a multiplicity of cable-guiding elements (16) fixed to the central element (14),
wherein each cable-guiding element (16) has a central element contact region (24) in the middle, which surrounds a section of the central element (14) in a non-positive or positive manner and
wherein each cable-guiding element (16) has a cable-guiding edge (26) surrounding the central element contact region (24) at a distance,
**characterized in**
**that** each cable-guiding element (16) is in two parts and the two parts (20, 22) can be detachably combined to form one cable-guiding element (16).

2. The device (10) according to claim 1,
wherein each cable-guiding element (16) is in two parts, which two parts (20, 22) of the cable-guiding element (16) have an identical form and wherein the two parts (20, 22) can be combined to form one cable-guiding element (16), by one of the two parts (20, 22) being rotated relative to the other part (20, 22) by 180°.

3. The device (10) according to claim 1 or 2,
wherein each of the two parts (20, 22) that can be combined to form one cable-guiding element (16) has an outer side with a section of the cable-guiding edge (26) and an inner side with a section of the central element contact region (24),
wherein the two parts (20, 22) can be combined to form one cable-guiding element (16), by one of the two parts (20, 22) being rotated relative to the other part (20, 22) such that the two inner sides are facing one another.

4. The device (10) according to any one of the preceding claims,
wherein each cable-guiding element (16) can be individually fixed to the central element (14), by the central element contact region (24) surrounding the central element (14) in a positive or non-positive manner.

5. The device (10) according to claim 4,
wherein in each cable-guiding element (16) the cable-guiding edge (26) of which and the central element contact region (24) of which are aligned relative to one another such that the section of the central element (14) surrounded by the central element contact region (24) is perpendicular to a plane defined by the cable-guiding edge (26).

6. The device (10) according to any one of the preceding claims,
wherein each of the two parts (20, 22) that can be combined to form one cable-guiding element (16) has an arm (30) and a cable-guiding section (32),
wherein a free end of the arm (30) runs out into a section of the central element contact region (24) and
wherein the arm (30) merges in one piece into the cable-guiding section (32) at an end opposite the free end with the section of the central element contact region (24).

7. The device (10) according to any one of the preceding claims,
wherein the two parts (20, 22) that can be combined to form one cable-guiding element (16) in each case can be connected detachably with one another in the region of the cable-guiding edge (26).

8. The device (10) according to any one of the preceding claims,
wherein each of the two parts (20, 22) that can be combined to form one cable-guiding element (16), when combined in a positive manner, has interlocking adjustment contours (34, 36).

9. The device (10) according to any one of the preceding claims,
wherein a link chain functions as central element (14) and
wherein each cable-guiding element (16) has a cable nut profile (38) for receiving at least one section of such a central element (14) in a positive manner.

## Revendications

1. Dispositif (10) pour le guidage de conduites (12),
avec un élément central (14) résistant à la traction et une pluralité d'éléments de guidage de câble (16) fixés à l'élément central (14),
dans lequel chaque élément de guidage de câble (16) comprend, au centre, une zone de contact d'élément central (24) qui entoure une portion de l'élément central (14) par force et/ou par complémentarité de forme et
dans lequel chaque élément de guidage de câble (16) comprend un bord de guidage de câble (26) entourant, à une certaine distance, la zone de contact d'élément central (24),
**caractérisé en ce que**
chaque élément de guidage de câble (16) est constitué de deux parties et les deux parties (20, 22) peuvent être combinées de manière amovible en un élément de guidage de câble (16).

2. Dispositif (10) selon la revendication 1,
dans lequel chaque élément de guidage de câble (16) est constitué de deux parties, les deux parties (20, 22) de l'élément de guidage de câble (16) présentent une forme identique et dans lequel les deux parties (20, 22) peuvent être combinées en un élément de guidage de câble (16) en tournant une des deux parties (20, 22) de 180° par rapport à l'autre partie (20, 22).

3. Dispositif (10) selon la revendication 1 ou 2,
dans lequel chacune des deux parties (20, 22) pouvant être combinées en un élément de guidage de câble (16) présente un côté externe avec une portion du bord de guidage de câble (26) et un côté interne avec une portion de la zone de contact de l'élément central (24),
dans lequel les deux parties (20, 22) peuvent être combinées en un élément de guidage de câble (16), grâce au fait qu'une des deux parties (20, 22) est tournée par rapport à l'autre partie (20, 22) de façon à ce que les deux côtés internes soient orientés l'un vers l'autre.

4. Dispositif (10) selon l'une des revendications précédentes,
dans lequel chaque élément de guidage de câble (16) peut être fixé individuellement à l'élément central (14), grâce au fait que la zone de contact de l'élément central (24) entoure l'élément central (14) par complémentarité de forme et/ou par force.

5. Dispositif (10) selon la revendication 4,
dans lequel, sur chaque élément de guidage de câble (16), dont le bord de guidage de câble (26) et la zone de contact de l'élément central (24) sont orientés l'un par rapport à l'autre de façon à ce que la portion de l'élément central (14) entourée par la zone de contact de l'élément central (24), soit perpendiculaire à un plan défini par le bord de guidage de câble (26).

6. Dispositif (10) selon l'une des revendications précédentes,
dans lequel chacune des deux parties (20, 22) pouvant être combinées en un élément de guidage de câble (16) comprend un bras (30) et une portion de guidage de câble (32),
dans lequel une extrémité libre du bras (30) sort dans une portion de la zone de contact de l'élément central (24) et
dans lequel le bras (30) se transforme, au niveau d'une extrémité opposée à l'extrémité libre avec la portion de la zone de contact de l'élément central (24), d'une seule pièce, dans la portion de guidage de câble (32).

7. Dispositif (10) selon l'une des revendications précédentes,
dans lequel les deux parties (20, 22) pouvant être combinées en un élément de guidage de câble (16) peuvent être reliées entre elles, de manière amovible, respectivement au niveau du bord de guidage de câble (26).

8. Dispositif (10) selon l'une des revendications précédentes,
dans lequel chacune des deux parties (20, 22) pouvant être combinées en un élément de guidage de câble (16) présente des contours d'ajustement (34, 36) s'emboîtant l'un dans l'autre par complémentarité de forme lors de la combinaison.

9. Dispositif (10) selon l'une des revendications précédentes,
dans lequel, en tant qu'élément central (14), on utilise une chaîne à maillons, et
dans lequel chaque élément de guidage de câble (16) comprend, pour le logement par complémentarité de forme d'au moins une portion d'un tel élément central (14), un profilé d'âme porteuse de câble (38).
